(19) **Europäisches Patentamt**
**European Patent Office**
**Office européen des brevets**

(11) **EP 4 220 078 A1**

(12) **EUROPEAN PATENT APPLICATION**
published in accordance with Art. 153(4) EPC

(43) Date of publication:
**02.08.2023 Bulletin 2023/31**

(21) Application number: **20955177.9**

(22) Date of filing: **24.09.2020**

(51) International Patent Classification (IPC):
**G01C 3/06** (2006.01)    **G01S 17/894** (2020.01)

(52) Cooperative Patent Classification (CPC):
**G01C 3/06; G01S 17/894**

(86) International application number:
**PCT/JP2020/035924**

(87) International publication number:
**WO 2022/064583 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sony Interactive Entertainment Inc.
Tokyo 108-0075 (JP)**

(72) Inventors:
• **TAKANO Akihiro
Tokyo 108-0075 (JP)**
• **MYOKAN Yoshihiro
Tokyo 108-0075 (JP)**
• **INADA Tetsugo
Tokyo 108-0075 (JP)**

(74) Representative: **Müller Hoffmann & Partner
Patentanwälte mbB
St.-Martin-Strasse 58
81541 München (DE)**

(54) **DISTANCE INFORMATION GENERATION DEVICE AND DISTANCE INFORMATION GENERATION METHOD**

(57)    A distance information generation apparatus obtains a measurement depth image 70 that expresses a measurement result for a distance to an object and a color image 72 captured at a corresponding field of view. The measurement depth image 70 is upsampled by a predetermined technique to generate a candidate depth image 74. On the basis of a result of analyzing the color image 72, a reflection characteristic for the object, and information regarding a relative motion between an image capturing apparatus and the object, a reliability image 76, in which a reliability for a distance value expressed by the candidate depth image is set for each pixel, is generated. A distance value having a high reliability is read out for each pixel from the candidate depth image 74, whereby an output depth image 78 is generated.

FIG.5

# Description

## [Technical Field]

The present invention pertains to a distance information generation apparatus that obtains distance information for an object in a real space, and a distance information generation method.

## [Background Art]

A technique for obtaining a position or motion of a real object and, in accordance therewith, performing information processing or giving a warning is used in many fields, such as electronic content, robots, vehicles, surveillance cameras, unmanned aircraft (drones), and IoT (Internet of Things). For example, in the field of electronic content, motion by a user who is wearing a head-mounted display is detected, and, to correspond thereto, a game is caused to progress and be reflected to a virtual world being displayed, whereby it is possible to realize a virtual experience having a sense of immersion.

LiDAR (Light Detection and Ranging) is one technique for obtaining position information for a real object. LiDAR is a technique for irradiating light onto a real object and observing reflected light therefrom to thereby derive a distance to the real object. Put to practical use as LiDAR are dTof (direct Time of Flight) which obtains a distance on the basis of the time difference from irradiation of pulse-shaped light to the observation of reflected light, and iToF (indirect Time of Flight) which obtains a distance on the basis of a phase difference for light for which a period has been made to change (for example, refer to PTLs 1 and 2, and NPL 1).

## [Citation List]

### [Patent Literature]

[PTL 1]
Japanese Patent Laid-Open No. 2019-152616
[PTL 2]
Japanese Patent Laid-open No. 2012-49547

### [Non-Patent Literature]

[NPL 1]
Dr. David Horsley, "World's first MEMS ultrasonic time-of-flight sensors, [online], TDK Technologies & Products Press Conference 2018, [searched on July 8, 2020], internet <URL:https://www.tdk-electronics.tdk.com/download/2431644/f7219af118484fa9afc46dc1699bacca/02-presentation-summary.pdf>

## [Summary]

### [Technical Problem]

Regardless of the method employed, if using typical distance measurement techniques, it is often the case that there are limited points on a real object for which distance values are obtained, or only information at a coarse granularity is obtained. When attempting to measure and obtain detailed information, versatility becomes poor because an apparatus becomes large-scale or an amount of time is required to output a result. From now on, it is considered that information processing performed using the distance to a real object as well as position information or motion thereof will increasingly diversify, and easily obtaining detailed position information at higher accuracy is required.

The present invention is made in the light of such problems, and an objective thereof is to provide a technique for accurately and easily obtaining detailed position information for a real object.

### [Solution to Problem]

One aspect of the present invention pertains to a distance information generation apparatus. The distance information generation apparatus includes a measurement depth image obtainment unit configured to obtain data regarding a measurement depth image that expresses a distribution of distance values to an object and is obtained by using image capturing, an upsampling unit configured to generate a candidate depth image obtained by upsampling, by a predetermined method, distance values expressed by the measurement depth image, a reliability determination unit configured to, on the basis of information different to the measurement depth image, determine, for each pixel or for each region, a reliability for distance values expressed by the candidate depth image, and an output data generation unit configured to, on the basis of the reliability, read out distance values to be employed from the candidate depth image, and generate and output an output depth image having the distance values to be employed as pixel values.

Yet another aspect of the present invention pertains to a distance information generation method. The distance information generation method includes a step for obtaining data regarding a measurement depth image that expresses a distribution of distance values to an object and is obtained by using image capturing, a step for generating, and storing in a memory, a candidate depth image obtained by upsampling, by a predetermined method, distance values expressed by the measurement depth image, a step for, on the basis of information different to the measurement depth image, determining, for each pixel or for each region, a reliability for distance values expressed by the candidate depth image, and a step for reading out, on the basis of the reliability, distance values to be employed from the candidate depth image, and generating and outputting an output depth image having the distance values to be employed as pixel values.

Note that results of converting any defined combinations of the above components and expressions of the present invention among a method, an apparatus, and so forth are also effective as aspects of the present invention.

[Advantageous Effect of Invention]

According to the present invention, it is possible to accurately and easily obtain detailed position information for a real object.

[Brief Description of Drawings]

[FIG. 1]

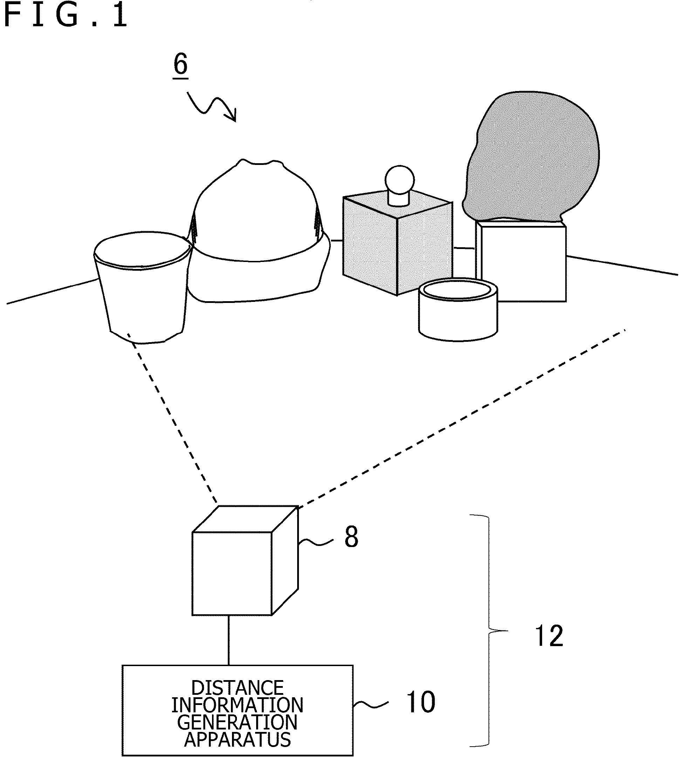

FIG. 1 is a view for describing a distance measurement environment according to a distance information generation system according to the present embodiment.
[FIG. 2]

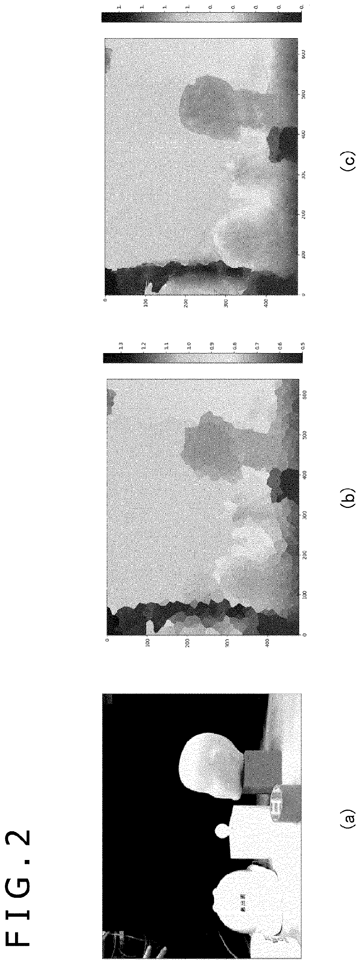

FIG. 2 depicts a view that exemplifies distance information generated by a distance information generation apparatus in the present embodiment.
[FIG. 3]

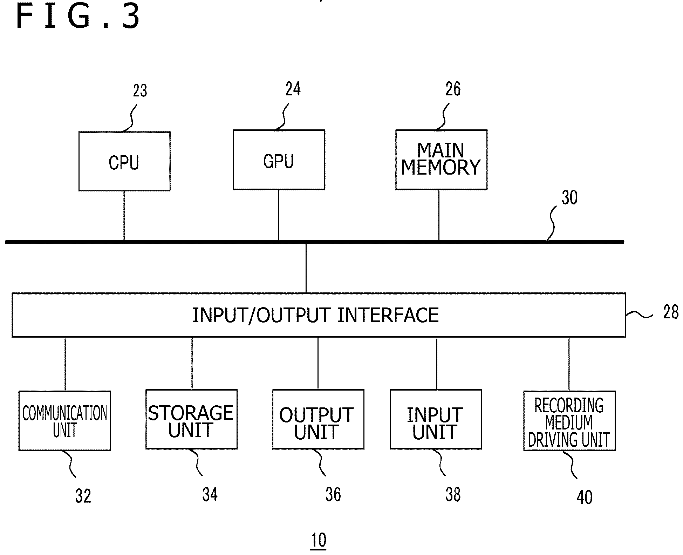

FIG. 3 is a view that illustrates an internal circuit configuration of a distance information generation apparatus in the present embodiment.
[FIG. 4]

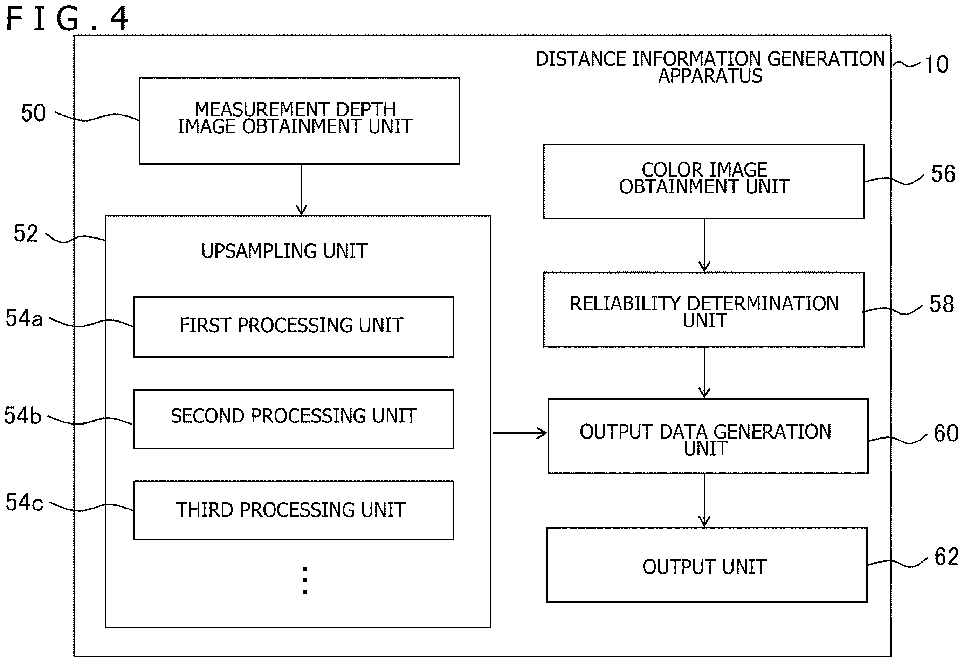

FIG. 4 is a view that illustrates a configuration of functional blocks in the distance information generation apparatus in the present embodiment.
[FIG. 5]

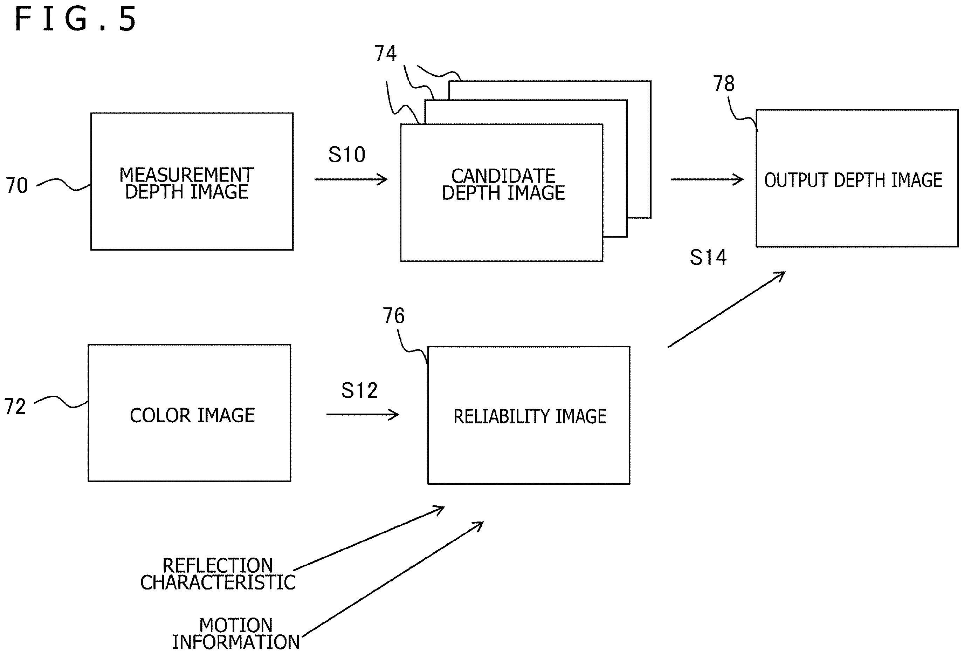

FIG. 5 is a view that illustrates a processing procedure for the distance information generation apparatus in the present embodiment to generate distance information.
[FIG. 6]

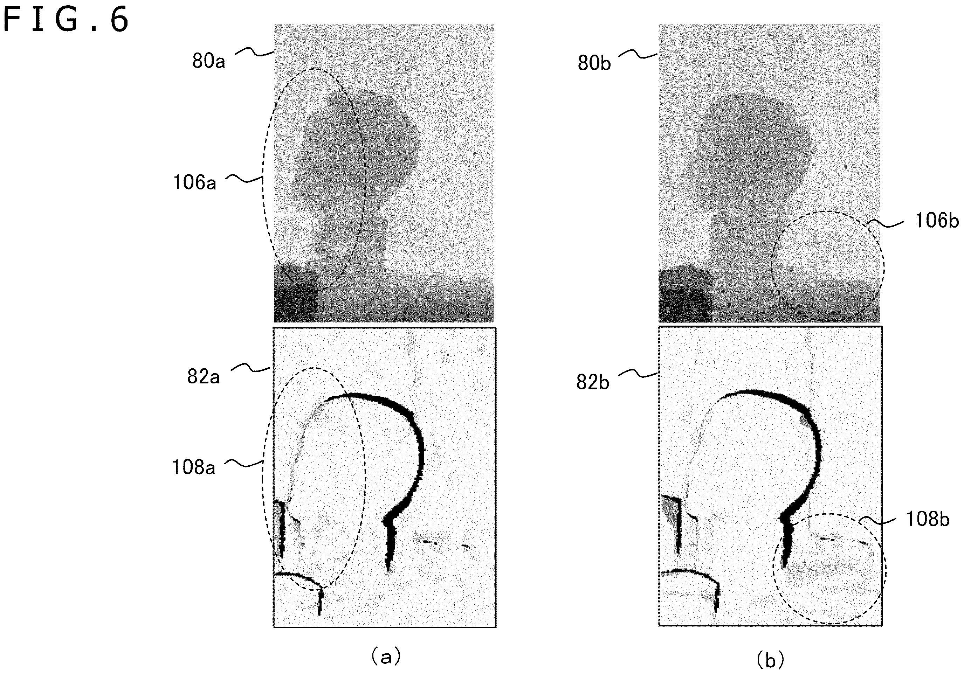

FIG. 6 depicts a view that illustrates an actual example of candidate depth images generated by an upsampling unit, in the present embodiment.
[FIG. 7]

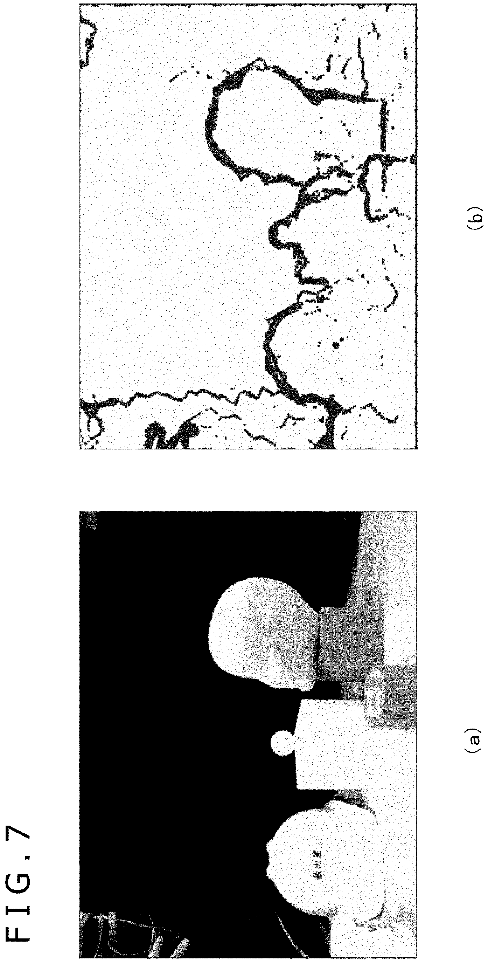

FIG. 7 depicts a view that illustrates an actual example of a result of extracting an edge region which is set as a ground when a reliability determination unit determines a reliability in the present embodiment.
[FIG. 8]

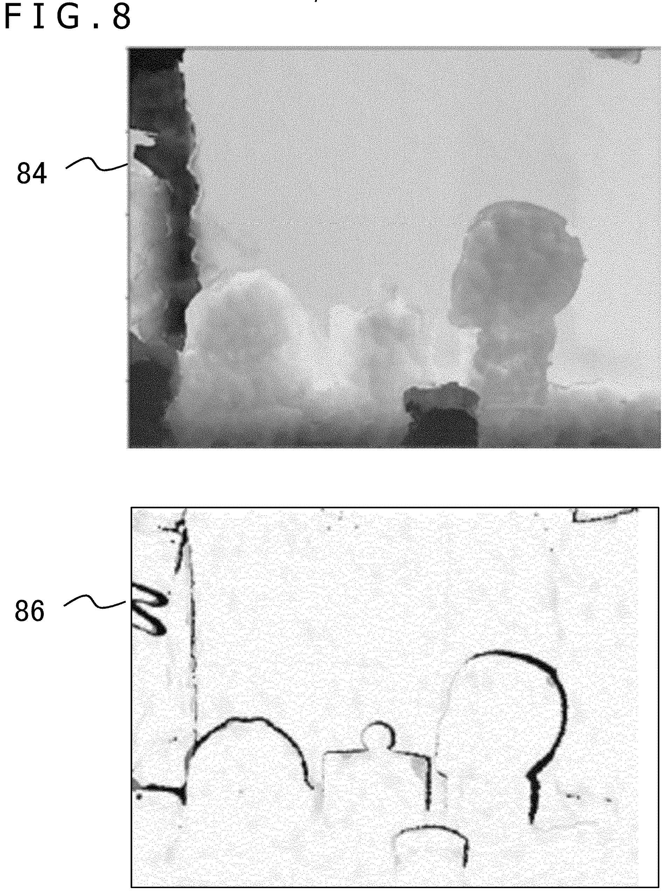

FIG. 8 is a view that illustrates an actual example of an output depth image generated by an output data generation unit in the present embodiment.
[FIG. 9]

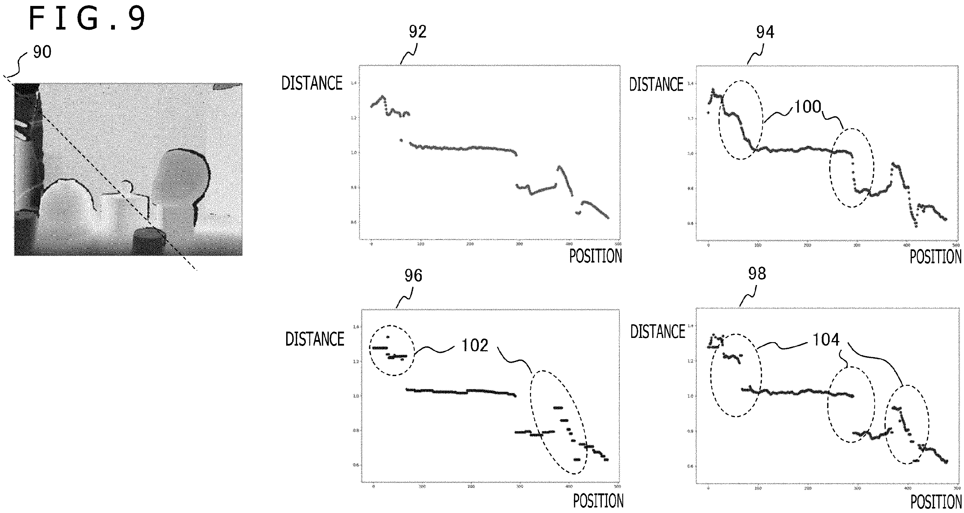

FIG. 9 is a view for comparing results for distance values belonging to candidate depth images and an output depth image, in the present embodiment.

[Description of Embodiment]

The present embodiment pertains to a technique for generating distance information for an object. Specifically, a two-dimensional distribution of distance values having coarse granularity and obtained with a conventional distance measurement technique is accurately supplemented (upsampled), and detailed distance information is generated. A distance measurement technique employed in this case is not particularly limited to any kind, and it is possible to employ any measurement method or means that puts a TOF sensor, a stereo camera, or the like to practical use.

FIG. 1 is a view for describing a distance measurement environment according to a distance information generation system according to the present embodiment. A distance information generation system 12 includes an image capturing apparatus 8 and a distance information generation apparatus 10. The image capturing apparatus 8 includes a sensor for distance measurement, such as a TOF sensor or a stereo camera, and obtains a distance to real objects 6 as a two-dimensional distribution. By using a TOF sensor, light having a specific wavelength band is irradiated onto the real objects 6 and light reflected therefrom is observed by an image capturing element array, whereby it is possible to use the time difference or phase difference therebetween to obtain the distance to the real objects 6.

By using a stereo camera, it is possible to use the principle of triangulation to obtain the distance on the basis of position deviation for images of the same real object 6 in a stereo image captured by two cameras separated to the left and right. These are all known techniques. A TOF sensor and a stereo camera can be comprehended as "image capturing" means in the point of detecting a two-dimensional distribution for light from the real objects 6, and therefore these are generically named as an image capturing apparatus in the present embodiment. However, the image capturing apparatus 8, as needed, also has a function for obtaining a two-dimensional distribution for distance values by performing a calculation on an image which is a result of having performed image capturing. Alternatively, this function may be provided in the distance information generation apparatus 10.

The image capturing apparatus 8 according to the present embodiment also has a function for capturing a color image of the real objects 6. For example, it may be that the image capturing apparatus 8 includes a typical image sensor such as a CCD (Charge Coupled Device) or CMOS (Complementary Metal Oxide Semiconductor), detects reflected light for the TOF described above, as well as captures a color image. In a case of using a stereo camera to obtain a distance, it may be that one captured image is used as a color image. Alternatively, to the extent that a determination is made to handle an angle of view, a camera for capturing a color image may be provided separately from a camera for distance measurement.

In any case, the image capturing apparatus 8 outputs, to the distance information generation apparatus 10 at a predetermined timing or at a predetermined frequency, a two-dimensional distribution of distance values to the real objects 6 and data for a color image which is a two-dimensional distribution of color information for the real objects 6. Note that, as described below, the image capturing apparatus 8 may capture a polarized image having a plurality of orientations. In this case as well, it may be that a polarizing plate for which an orientation can be changed according to rotation is mounted on the front surface of a camera lens or a polarizer layer having a different main axis angle is provided for an image capturing element included in an image sensor, to thereby obtain a two-dimensional distribution of distance values, a color image, and a polarized image by using the same image sensor, or it may be that a polarizing camera is separately provided.

The distance information generation apparatus 10 obtains the two-dimensional distribution of distance values and color image data from the image capturing apparatus 8, and upsamples the distance values to thereby generate more detailed distance information. In other words, from a two-dimensional distribution of distance values which has gaps or coarse granularity and is obtained by using TOF or a stereo image, the distance information generation apparatus 10 generates data for a second-order distribution in which distance values are uniformly expressed at a predetermined resolution. Below, the former is referred to as a measurement depth image, and the latter is referred to as an output depth image.

In generation of an output depth image, on the basis of information that expresses the real objects 6 and has been separately obtained such as a color image, the distance information generation apparatus 10 switches, in an image plane, a method to use for upsampling. Note that the image capturing apparatus 8 and the distance information generation apparatus 10 may be realized as the same apparatus. Alternatively, the distance information generation apparatus 10 or the image capturing apparatus 8 and the distance information generation apparatus 10 may be made to be a portion of an apparatus that uses distance information to perform information processing, such as a game apparatus, a portable terminal, a personal computer, or a head-mounted display.

FIG. 2 exemplifies distance information generated by the distance information generation apparatus 10. (a) is a typical image resulting from the image capturing apparatus 8 capturing the real objects 6 in the environment illustrated in FIG. 1. Grayscale is employed in the figure, but color image capturing is performed, whereby usage is possible in the generation of distance information in the distance information generation apparatus 10. (b) illustrates a measurement depth image obtained in a corresponding fashion. This image also expresses distance values in grayscale, but in practice expression is performed by a color change. As illustrated, the distance values are associated in comparatively large region units in the measurement depth image.

(c) illustrates an output depth image generated by the distance information generation apparatus 10. The distance information generation apparatus 10 can upsample a measurement depth image as appropriate to thereby generate a depth image in which distance values are expressed in particularly fine units. As a result, it is possible to also identify the shape of the surface of each object and not only the distance in units of objects, and it is possible to accurately perform object recognition, motion detection, etc. As a result, it is possible to improve the accuracy of information processing that uses these items of data, and broaden an application range.

FIG. 3 illustrates an internal circuit configuration of the distance information generation apparatus 10. The distance information generation apparatus 10 includes a CPU (Central Processing Unit) 23, a GPU (Graphics Processing Unit) 24, and a main memory 26. These units are connected to each other via a bus 30. An input/output interface 28 is also connected to the bus 30. Connected to the input/output interface 28 are a communication unit 32 that includes a peripheral interface for a USB (Universal Serial Bus), IEEE (Institute of Electrical and Electronics Engineers) 1394, or the like or a network interface for a wired or wireless LAN (Local Area Network), a storage unit 34 that is a hard disk drive, a non-volatile memory, or the like , an output unit 36 that outputs data to an external apparatus as necessary , an input unit 38 that is inputted with data from the image capturing apparatus 8 or an unillustrated input apparatus, and a recording medium driving unit 40 that drives a removable recording medium such as a magnetic disk, an optical disk, or a semiconductor memory.

The CPU 23 executes an operating system stored in the storage unit 34, to thereby control the entirety of the distance information generation apparatus 10. The CPU 23 also executes various programs that are read out from a removable recording medium and loaded into the main memory 26 or are downloaded via the communication unit 32. The GPU 24 has a geometry engine function and a rendering processor function, and performs a drawing process or image analysis according to a command from the CPU 23. The main memory 26 includes a RAM (Random-Access Memory), and stores a program or data that is necessary for processing.

FIG. 4 illustrates a configuration of functional blocks in the distance information generation apparatus 10 according to the present embodiment. Each illustrated functional block can be realized in terms of hardware such as the CPU 23, the GPU 24, and the main memory 26 illustrated in FIG. 3, and is realized in terms of software such as by a computer program loaded into the main memory 26 from a hard disk or recording medium. Accordingly, a person skilled in the art would understand that these functional blocks can be realized in various forms by only hardware, only software, or a combination thereof, and are not limited to one of these.

The distance information generation apparatus 10 includes a measurement depth image obtainment unit 50 that obtains data regarding a measurement depth image, a color image obtainment unit 56 that obtains data regarding a color image, an upsampling unit 52 that performs upsampling result for a distance value, a reliability determination unit 58 that determines a reliability of an upsampling result for each pixel or for each region, an output data generation unit 60 that, on the basis of a reliability, selects an upsampling result and generates an output depth image, and an output unit 62 that outputs the generated output depth image.

The measurement depth image obtainment unit 50 obtains data regarding a depth image measured by the image capturing apparatus 8. In a case where the distance information generation apparatus 10 continues to generate distance information, the measurement depth image obtainment unit 50 obtains data for a measurement depth image at a predetermined frame rate. The color image obtainment unit 56 obtains data regarding a color image obtained by being captured by the image capturing apparatus 8. The color image is captured at the same timing as the measurement depth image obtained by the measurement depth image obtainment unit 50. As described above, the color image and the measurement depth image are made to have corresponding fields of view.

For example, as described above, if both are obtained by the same image sensor, the fields of view match by themselves. In a case of using different cameras, it is possible to obtain correspondence for the fields of view by prior calibration. The upsampling unit 52 uses a predetermined method to upsample the measurement depth image obtained by the measurement depth image obtainment unit 50, to thereby generate a depth image that expresses candidate distance values (hereinafter, referred to as a candidate depth image).

For interpolation of pixel values or expansion of an image, various methods have been put into practical use in the past, such as a bilinear method, a nearest neighbor method, a bilateral method, a median method, and Gaussian interpolation. Furthermore, in recent years, a CNN (Convolutional Neural Network) is widely known as a technique for image processing in the field of deep learning All of these methods exhibit the effect of being able to make the appearance of a typical image be satisfactory but, in a case where application is with respect to a depth image, it may not be possible to achieve sufficient accuracy from a perspective of what kind of shape change a real object undergoes.

For example, by using the bilinear method or a CNN, there is slow change for a shape having a step, such as an outline portion of an object, and a result in which an inclination is gentler than the actual step is more likely to be achieved. This is common for these methods, and is due to using regression analysis to fit a continuous function to pixel values. In contrast, if using a method that directly uses pixel values for sample points without using regression, how sample points are selected, etc., impacts the accuracy of distance values.

For example, the median method takes the median of the pixel values for a predetermined number of neighboring sample points as the pixel value for a target pixel. In this case, because pixel values not selected as sample points are not reflected in a result, there are cases where accuracy is not produced in a region of an image of an object surface that changes smoothly, such as an inclined plane. In this manner, in upsampling that takes a depth image as a processing target, there are shapes (change of distance) for which it is difficult to reflect an entity, regardless of the method.

Accordingly, in the present embodiment, for example, results of hypothetically performing upsampling by a plurality of methods are obtained as candidate depth images, and a result having a high reliability is selected for each pixel or for each region. In this case, as illustrated, the upsampling unit 52 has a plurality of independent processing mechanisms including a first processing unit 54a, a second processing unit 54b, a third processing unit 54c, ..., and upsamples a depth image by respectively different methods. For example, the first processing unit 54a, the second processing unit 54b, and the third processing unit 54c upsample a measurement depth image by a CNN, the median method, and the nearest neighbor method, respectively.

Methods of upsampling performed by the upsampling unit 52 are determined in advance and allocated to the first processing unit 54a, the second processing unit 54b, the third processing unit 54c, .... Accordingly, each of the first processing unit 54a, the second processing unit 54b, the third processing unit 54c, ... holds, in an internal memory, various parameters or a filter necessary for processing. In addition, the first processing unit 54a which uses a CNN holds a result of learning a continuous function to be employed. This learning result may be obtained from a server or the like to which the distance information generation apparatus 10 is connected via a network. Alternatively, the first processing unit 54a itself may be provided in a cloud environment.

Note that, although the first processing unit 54a, the second processing unit 54b, the third processing unit 54c, ... are illustrated in the figure as functional blocks that perform upsampling independently, the number of processing units is not particularly limited. For example, even with one processing unit, it is possible to invalidate a result for which a reliability is less than or equal to a threshold to thereby remove a distance value for which a large error is predicted from output data. In a case of providing a plurality of processing units in the upsampling unit 52, the greater the number thereof the more a processing load will increase, leading to a delay in outputting a result. In addition, a method that tends to have low reliability has a low frequency of results thereof being employed, and is largely wasteful overall.

Accordingly, an appropriate number is set according to the processing performance of the distance information generation apparatus 10 and an accuracy required for output data. It is typical for approximately four processing units to be provided. The reliability determination unit 58 uses a color image obtained by the color image obtainment unit 56, to derive, for each pixel or for each region, a reliability of a processing result in the upsampling unit 52 from such a perspective such as a characteristic of the surface or the shape of an object or a measurement status. For example, the reliability determination unit 58 uses a CNN to extract an edge region that represents an outline of an object from the color image. This processing is one which is typical in a CNN.

Therefore, the reliability determination unit 58 imparts a high reliability to a result of upsampling by using the median method with respect to a pixel included in an edge region or in a region within a predetermined range from the region, and imparts a high reliability to a result of upsampling by using a CNN with respect to a pixel in another region. In this manner, weaknesses due to using the various methods described above are respectively compensated, and distance values having a high accuracy can be achieved for all pixels.

In a case where the upsampling unit 52 performs upsampling by using one method, the reliability determination unit 58 may determine whether or not to employ a result of the upsampling, as a reliability. For example, in a case where the upsampling unit 52 performs only upsampling by using a CNN, the reliability determination unit 58 sets upsampling results for pixels included in an edge region as to be rejected and sets other regions as to be employed. In the former case, invalid data is assigned as the value of corresponding pixels in an output depth image.

A reliability determined by the reliability determination unit 58 in this manner may be a rank imparted to a plurality of upsampling results or may be something that expresses employment/rejection for one upsampling result. In other words, a reliability is not limited to being expressed as a number, and may be information expression whether to employ or not employ a result according to whichever method. Means by which the reliability determination unit 58 determines a reliability is not limited to a CNN, and any typical image analysis technique such as edge extraction, template matching, or feature point extraction may be used.

In addition, a ground why the reliability determination unit 58 determines a reliability is not limited to being an edge region or not. For example, the reliability determination unit 58 may use a color image to perform subject recognition by using a CNN, and identify, on the basis of information registered in advance, an upsampling method suitable for an estimated shape as well as an unsuitable upsampling method to thereby increase the reliability of the former and decrease the reliability of the latter.

Alternatively, the reliability determination unit 58 may adjust the reliability of a method for directly performing upsampling from a sample point, the adjustment being according to the sample point, in other words, the density of distance values obtained through measurement. For example, in a case of performing upsampling by the median method, pixels that have an obtained distance value and are not within a predetermined range or pixels that do not reach a predetermined number are identified, and a low reliability is imparted to results by using the median method for these pixels. Alternatively, the reliability determination unit 58 may identify a pixel having a low reliability for a distance measurement value in a measurement depth image, and impart a low reliability to all upsampling methods for a region in a predetermined range from this pixel.

As cases where the reliability of a distance measurement value is low, there are cases for a region having many specular reflection components, a region in which only a portion of a surface texture changes, an image for a black object, and where a plurality of local maximums are detected for the number of photons observed in a TOF sensor. The reliability determination unit 58 may analyze a color image to thereby identify a pixel estimated to have a low measurement value reliability due to these situations. At this time, a CNN may be used to estimate such a pixel on the basis of a result learned in advance.

Alternatively, the reliability determination unit 58 may use a polarized image described above to identify a pixel having a low measurement value reliability. A polarizing camera that can capture a color polarized image due to a polarizer layer being provided on an upper layer of a color filter is widely known. For example, a polarizer that includes a fine wire grid is provided in an upper layer for the image capturing element at main axis angles 0°, 45°, 90°, and 135°, and light transmitted through the polarizers and the color filter is converted to an electric charge and read out, whereby polarized images for four types of orientations can be obtained as color images (for example, refer to Japanese Patent Laid-Open No. 2012-80065).

In this case, it is possible to add together, for each pixel, the polarized images for four orientations to thereby obtain a color image with natural light. In addition, a dependency of polarization intensity with respect to orientation is obtained for each pixel to thereby enable identification of a reflection characteristic for an object surface, in other words, whether a specular reflection component is dominant or a diffuse reflection component is dominant (for example, Japanese Patent Laid-Open No. 2009-58533). Accordingly, the reliability determination unit 58 identifies a region where a specular reflection component is dominant from the polarized images for the four orientations, and reduces the reliability of a distance value measured in this region or an upsampling result that uses this.

Furthermore, the reliability determination unit 58 may use relative motion information between the image capturing apparatus 8 and a real object as a ground for a reliability determination. For example, in a case where the distance information generation system 12 according to the present embodiment is mounted in an unillustrated head-mounted display, the reliability determination unit 58 obtains a measurement value from a motion sensor caused to be incorporated in the head-mounted display. When the head-mounted display has high acceleration or angular velocity, blurring (motion blur) arises in a captured color image.

In this case, because an error will arise in image recognition using this color image, the accuracy of a reliability based on this will itself worsen. Accordingly, for example, the reliability determination unit 58 may suspend processing for determining a reliability in a time period in which a parameter that expresses the magnitude of motion, such as an acceleration or angular velocity measured by a motion sensor or a speed obtained from these, exceeds a threshold. Alternatively, for this time period, the reliability determination unit 58 may set the reliability of all upsampling results to low, or may suspend the output itself of an output depth image.

Note that it is possible to similarly obtain motion information in a case where the distance information generation system 12 is immobilized and a real object is regarded as an object in which a motion sensor is mounted, such as a controller. Motion sensors may be mounted in both of the distance information generation system 12 and a real object. In any case, it is sufficient if relative motion for the two is identified and processing for determining reliability is switched according to the magnitude thereof, and motion information may be obtained by using an external camera in place of a motion sensor.

Stored in advance in the reliability determination unit 58 is a table that associates a condition enabling high accuracy to be achieved and a condition likely to result in low accuracy, with each upsampling method. Here, a condition likely to result in low accuracy means a condition that will not result in more than a certain level of accuracy even if a filter coefficient is changed or no matter how much training is performed in the case of a CNN, and can be identified by a prior experiment or a learning result. Similarly, by using a prior experiment or a learning result, a condition enabling high accuracy to be achieved is registered together with an optimal filter coefficient, algorithm, or the like.

Therefore, at a time of operation, the reliability determination unit 58 increases the reliability of an upsampling method for which an analysis result of a color image or the like matches a condition that enables high accuracy to be achieved. In addition, the reliability is lowered for an upsampling method for which the analysis result matches a condition likely to result in low accuracy. Alternatively, it may be that one upsampling method that is to be a base is defined in advance and, for only a portion in which this method satisfies a condition likely to result in low accuracy, the reliability is determined in order to select another method for which a higher accuracy can be achieved.

In a case of evaluating reliability from many sides in consideration of the reliability of a measurement value itself as described above, for example, the reliability determination unit 58 may calculate a score S(i) expressing the reliability of an i-th upsampling method in the following manner.

$$S(i) = \Sigma s_i(x)$$

Here, $s_i(x)$ is a function that expresses a reliability score with respect to an element x. The element x is, for example, something such as whether it is an edge region or not, as well as the shape, the color, the reflection characteristic, and a relative speed of an object. There are cases where the function $s_i(x)$ changes due to the upsampling method even with the same element x, and cases where the function $s_i(x)$ has the same change regardless of upsampling method.

On the basis of the reliability determined by the reliability determination unit 58, the output data generation unit 60 determines and reads out, for each pixel, a distance value having a high reliability from candidate depth images generated by the upsampling unit 52, to thereby generate an output depth image. In a case where the reliability determination unit 58 assigns a reliability rank to upsampling results, the output data generation unit 60 reads out the upsampling result having the highest rank. In a case where the reliability determination unit 58 calculates the above-described score value, the output data generation unit 60 reads out the upsampling result that has achieved the highest score value.

In addition, the output data generation unit 60 does not read out an upsampling result for pixels for which the reliability determination unit 58 has determined the rejection of an upsampling result, or pixels that all have score values less than or equal to a threshold. In this case, the output data generation unit 60 stores a value indicating invalid, such as 0, to these pixels in the output depth image.

Note that the output data generation unit 60 may also perform filtering processing on a depth image that includes distance values read out from candidate depth images. For example, it is possible to perform smoothing by using a Gaussian filter or the like to thereby prevent distance values for adjacent pixels from changing unnaturally due to different upsampling methods. In this case, it may be that the output data generation unit 60 performs smoothing processing only near a boundary between regions in which different upsampling results are employed.

The output unit 62 outputs an output depth image generated by the output data generation unit 60. An output destination may be another module that uses the output depth image to perform information processing, or may be a storage region or the like in the distance information generation apparatus 10. Note that the measurement depth image obtainment unit 50 or the color image obtainment unit 56 may instantly obtain a measurement depth image or a color image in a pixel column order by which the image capturing apparatus 8 has performed measurement or image capturing.

Each processing unit in the upsampling unit 52 internally holds a line buffer for temporarily storing a number of rows of data from among a measurement depth image that are necessary for upsampling, and a line buffer for temporarily storing an upsampled result. Therefore, the output data generation unit 60, for each pixel, reads out a distance value to be employed from the line buffer that temporarily stores upsampled results, to thereby generate an output depth image, and sequentially supplies the output depth image to the output unit 62. In this manner, each functional block starts its own processing without waiting for processing for one frame in a previous functional block, to thereby enable measured distance information to be refined and outputted with a low delay.

FIG. 5 is a view that illustrates a processing procedure for the distance information generation apparatus 10 to generate distance information. Firstly, the measurement depth image obtainment unit 50 and the color image obtainment unit 56 respectively obtain a measurement depth image 70 and a captured color image 72 from the image capturing apparatus 8. Subsequently, the upsampling unit 52 upsamples the measurement depth image 70 by a predetermined method to thereby generate one or more candidate depth images 74 (S10). The resolution (image size) of a candidate depth image 74 is the same as the resolution of an output depth image.

Meanwhile, the reliability determination unit 58 analyzes the color image to thereby determine, for each pixel or for each region, a reliability for a distance value expressed by a candidate depth image (S12). In addition, it may be that, on the basis of a polarized image obtained together with the color image, the reliability determination unit 58 obtains a reflection characteristic for an object surface or obtains relative motion information between the image capturing apparatus 8 and an object from a motion sensor and, on the basis thereof, detects a time period in which motion blur occurs and reflects this time period to the reliability. Note that, among a color image analysis result, an object reflection characteristic, and information regarding a relative motion between the image capturing apparatus 8 and an object, all may be reflected to reliability or any one or two may be reflected to reliability.

For example, it may be that a color image is not used, and only a reflection characteristic according to a polarized image and/or motion information is set as a ground for a reliability determination. In any case, the reliability determination unit 58 generates a reliability image 76 in which a reliability is associated for each pixel in an image plane corresponding to an output depth image. On the basis of information regarding the reliability expressed by the reliability image 76, the output data generation unit 60 reads out, from a candidate depth image 74, a distance value to be employed, to thereby generate a final output depth image 78 (S14).

The output unit 62 outputs data for the generated output depth image to an external module or stores the generated output depth image in an internal storage region. These processes as above are actually performed in units of pixel columns, and the next subsequent process is started without waiting for processing for one frame, whereby distance information is outputted at high speed. Illustrated processing is repeated for a measurement depth image 70 that is for a respective time and is obtained by the image capturing apparatus 8 at a predetermined rate, whereby the output depth image 78 can also be outputted at this rate.

FIG. 6 illustrates an actual example of candidate depth images generated by the upsampling unit 52. (a) indicates a result according to a CNN, (b) indicates a result according to a weighted median method, and a partial region is displayed in an expanded fashion for the ease of understanding. In a candidate depth image 80a according to the CNN, an intermediate value not actually present is expressed in an outline of a real object, as can be seen in a region 106a, for example. As a result, a large error appears in an outline portion in a difference image 82a with respect to true values (Ground Truth) prepared for the same image capturing environment, as can be seen in a region 108a, for example. In a candidate depth image 80b according to the weighted median method, as can be seen in a region 106b, for example, distance values are calculated such that there is a step with respect to an inclined smooth surface. As a result, in a difference image 82b with respect to true values, for example, as can be seen in the region 108b, a comparatively large error appears in a region that expresses a surface.

FIG. 7 illustrates an actual example of a result of extracting an edge region which is set as a ground when the reliability determination unit 58 determines a reliability. On the basis of the color image indicated by (a), the reliability determination unit 58 generates an edge image indicated by (b). As described above, the edge image may be estimated by using a CNN or may be generated by using a typical edge extraction filter. The edge image in the figure uses black to express a region for which an edge is estimated by the CNN. For example, for the edge region or for a region within a predetermined range from this, the reliability determination unit 58 increases the reliability of a method that lacks regression analysis such as the weighted median method and, for other regions, increases the reliability of a method that lacks dependence on sample points such as a CNN.

FIG. 8 illustrates an actual example of an output depth image generated by the output data generation unit 60. In this example, the output data generation unit 60 generates an output depth image 84 as a result of using reliabilities determined on the basis of the edge image illustrated in FIG. 7 to read out one distance value for each pixel from the candidate depth images illustrated in FIG. 6. As indicated by a difference image 86 between the output depth image 84 and true values, highly accurate distance values to which change of an inclined smooth surface is directly reflected, without intermediate values being generated in outline portions, are achieved.

FIG. 9 compares results for distance values belonging to candidate depth images and an output depth image. As indicated by a broken line 90 in the top-left, the same figure compares change for distance values, on a straight line having a 45° inclination from the vertex on the top-left of the image plane toward the bottom-right, between true values 92, a candidate depth image 94 according to a CNN, a candidate depth image 96 according to the weighted median method, and an output depth image 98. In the candidate depth image 94 according to the CNN, intermediate values not present in the true values 92 appear in edge regions 100 that express object outlines.

In contrast, in the candidate depth image 96 according to the weighted median method, distance values are discrete in regions 102 that express the inclination of object surfaces, and smooth change as with the true values 92 is not achieved. By using reliabilities based on the edge image illustrated in FIG. 8, as a result of the output data generation unit 60 combining these items of candidate data, distance values that are smooth in the edge regions or inclined regions 104 and have no intermediate values are achieved in the generated output depth image 98. In other words, according to the present embodiment, it is understood that distance information close to the true values 92 is generated.

According to the present embodiment described above, measured depth images are upsampled, and a real object or measurement situation is also identified by using other means, whereby a reliability is assigned for upsampling results, and a result to be employed is selected for each pixel. For example, a pixel is classified by whether or not the pixel is in an edge region that expresses an object outline, and distance values achieved by respectively suitable methods are employed. Alternatively, an upsampling result is invalidated for a region for which not achieving accuracy is predicted.

As a result, differing to typical image interpolation, it is possible to easily derive a good result while using a conventional method, even in a depth image for which, rather than appearance, accuracy of values is required. In addition, the reliability of an upsampling result is determined by using a CNN or using an object surface reflection characteristic based on a polarized image or motion information according to a motion sensor, whereby it is possible to increase the accuracy of selecting distance values and consequently output distance information at high accuracy and high resolution.

Description is given above based on an embodiment of the present invention. The above-described embodiment is an example, and a person skilled in the art would understand that various variations can be made to combinations of respective components or processing processes of the embodiment, and that these variations are within the scope of the present invention.

[Reference Signs List]

8: Image capturing apparatus
10: Distance information generation apparatus
23: CPU
24: GPU
26: Main memory
50: Measurement depth image obtainment unit
52: Upsampling unit
54a: First processing unit
54b: Second processing unit
54c: Third processing unit
56: Color image obtainment unit
58: Reliability determination unit
60: Output data generation unit
62: Output unit

[Industrial Applicability]

As above, the present invention can be used in various apparatuses such as a distance information generation apparatus, an information processing apparatus, a game apparatus, a content processing apparatus, or a head-mounted display, and a system that includes these.

**Claims**

1. A distance information generation apparatus comprising:

a measurement depth image obtainment unit configured to obtain data regarding a measurement depth image that expresses a distribution of distance values to an object and is obtained by using image capturing;
an upsampling unit configured to generate a candidate depth image obtained by upsampling, by a predetermined method, distance values expressed by the measurement depth image;
a reliability determination unit configured to, on a basis of information different to the measurement depth image, determine, for each pixel or for each region, a reliability for distance values expressed by the candidate depth image; and
an output data generation unit configured to, on a basis of the reliability, read out distance values to be employed from the candidate depth image, and generate and output an output depth image having the distance values to be employed as pixel values.

2. The distance information generation apparatus according to claim 1, wherein

the upsampling unit generates a plurality of candidate depth images by performing upsampling by a plurality of methods, and the output data generation unit, on a basis of the reliability, selects for each pixel a distance value to be employed from among the plurality of candidate depth images.

3. The distance information generation apparatus according to claim 1 or 2, wherein the reliability determination unit determines the reliability on a basis of an analysis result according to a Convolutional Neural Network for a color image captured at a corresponding field of view.

4. The distance information generation apparatus according to claim 3, wherein the reliability determination unit extracts an edge region for an object on a basis of the color image and, by whether in the edge region or not, causes the reliability to change.

5. The distance information generation apparatus according to claim 3 or 4, wherein the reliability determination unit performs object recognition on a basis of the color image and increases the reliability of a distance value according to an upsampling method registered as being suitable for an estimated shape.

6. The distance information generation apparatus according to any one of claims 1 to 5, wherein the reliability determination unit, on a basis of at least one of a color and a surface reflection characteristic for an object, evaluates the reliability of a distance value in the measurement depth image and causes reflection to the reliability.

7. The distance information generation apparatus according to one of claims 1 to 6, wherein the reliability determination unit identifies a pixel for which a distance value in the measurement depth image is obtained but the distance value is not within a predetermined range or pixels for which a predetermined number is not reached, and adjusts the reliability for such pixels.

8. The distance information generation apparatus according to one of claims 1 to 7, wherein the reliability determination unit obtains a measurement value from a motion sensor incorporated in at least one of the object and an image capturing apparatus used to obtain the measurement depth image, and suspends processing for determining the reliability determination unit in a time period in which a magnitude of motion obtained from the measurement value exceeds a threshold.

9. The distance information generation apparatus according to one of claims 1 to 8, wherein the output data generation unit performs smoothing processing at, in the output depth image, a boundary between regions in which results upsampled by different methods are employed.

10. The distance information generation apparatus according to one of claims 1 to 9, wherein the output data generation unit associates invalid data for, among the output depth image, a pixel for which a reliability does not satisfy a predetermined criterion.

11. A distance information generation method by a distance information generation apparatus, the method comprising:

a step for obtaining data regarding a measurement depth image that expresses a distribution of distance values to an object and is obtained by using image capturing;

a step for generating, and storing in a memory, a candidate depth image obtained by upsampling, by a predetermined method, distance values expressed by the measurement depth image;

a step for, on a basis of information different to the measurement depth image, determining, for each pixel or for each region, a reliability for distance values expressed by the candidate depth image; and

a step for reading out, on a basis of the reliability, distance values to be employed from the candidate depth image, and generating and outputting an output depth image having the distance values to be employed as pixel values.

12. A computer program **characterized by** causing a computer to execute:

a function for obtaining data regarding a measurement depth image that expresses a distribution of distance values to an object and is obtained by using image capturing;

a function for generating a candidate depth image obtained by upsampling, by a predetermined method, distance values expressed by the measurement depth image;

a function for, on a basis of information different to the measurement depth image, determining, for each pixel or for each region, a reliability for distance values expressed by the candidate depth image; and

a function for reading out, on a basis of the reliability, distance values to be employed from the candidate depth image, and generating and outputting an output depth image having the distance values to be employed as pixel values.

# FIG.1

6

8

12

DISTANCE
INFORMATION
GENERATION
APPARATUS

10

FIG.2

(a)

(b)

(c)

# F I G . 3

```
        23              24              26
       CPU             GPU            MAIN
                                     MEMORY
                                                        30

─────────────────────────────────────────────────────────

┌─────────────────────────────────────────────────────┐
│            INPUT/OUTPUT INTERFACE                     │── 28
└─────────────────────────────────────────────────────┘

COMMUNICATION  STORAGE    OUTPUT    INPUT    RECORDING
    UNIT        UNIT       UNIT      UNIT     MEDIUM
                                            DRIVING UNIT

    32          34         36        38        40
```

<u>10</u>

# F I G . 4

DISTANCE INFORMATION GENERATION APPARATUS — 10

MEASUREMENT DEPTH IMAGE OBTAINMENT UNIT — 50

UPSAMPLING UNIT — 52

FIRST PROCESSING UNIT — 54a

SECOND PROCESSING UNIT — 54b

THIRD PROCESSING UNIT — 54c

COLOR IMAGE OBTAINMENT UNIT — 56

RELIABILITY DETERMINATION UNIT — 58

OUTPUT DATA GENERATION UNIT — 60

OUTPUT UNIT — 62

EP 4 220 078 A1

# FIG.5

FIG.6

FIG.7

(a)

(b)

FIG.8

84

86

F I G . 9

90

92
DISTANCE

94
DISTANCE

100

96
DISTANCE

102

98
DISTANCE

104

POSITION

POSITION

POSITION

POSITION

EP 4 220 078 A1

**INTERNATIONAL SEARCH REPORT**

| International application No. |
|---|
| PCT/JP2020/035924 |

| A. CLASSIFICATION OF SUBJECT MATTER |
|---|
| Int. Cl. G01C3/06(2006.01)i, G01S17/894(2020.01)i<br>FI: G01C3/06 140, G01S17/894 |
| According to International Patent Classification (IPC) or to both national classification and IPC |

| B. FIELDS SEARCHED |
|---|
| Minimum documentation searched (classification system followed by classification symbols)<br>Int. Cl. G01C3/06, G01S17/894 |
| Documentation searched other than minimum documentation to the extent that such documents are included in the fields searched<br>Published examined utility model applications of Japan    1922-1996<br>Published unexamined utility model applications of Japan   1971-2020<br>Registered utility model specifications of Japan      1996-2020<br>Published registered utility model applications of Japan  1994-2020 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | US 2015/0015569 A1 (SAMSUNG ELECTRONICS CO., LTD.) 15 January 2015 (2015-01-15), entire text, all drawings | 1-12 |
| A | CN 111652921 A (SHENZHEN UNIVERSITY) 11 September 2020 (2020-09-11), entire text, all drawings | 1-12 |
| A | JP 2007-179236 A (SONY CORP.) 12 July 2007 (2007-07-12), entire text, all drawings | 1-12 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25.11.2020 | 08.12.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2020/035924

| Patent Documents referred to in the Report | Publication Date | Patent Family | Publication Date |
|---|---|---|---|
| US 2015/0015569 A1 | 15.01.2015 | EP 2827297 A2<br>KR 10-2015-0008744 A | |
| CN 111652921 A | 11.09.2020 | (Family: none) | |
| JP 2007-179236 A | 12.07.2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019152616 A
- JP 2012049547 A
- JP 2012080065 A
- JP 2009058533 A

### Non-patent literature cited in the description

- **DR. DAVID HORSLEY.** World's first MEMS ultrasonic time-of-flight sensors. *TDK Technologies & Products Press Conference,* 2018, https://www.tdk-electronics.tdk.com/download/2431644/f7219af118484fa9afc46dc1699bacca/02-presentation-summary.pdf